# EUROPEAN PATENT SPECIFICATION

(11) **EP 2 852 302 B1**
(45) Date of publication and mention of the grant of the patent: **15.05.2019**
(21) Application number: 13731848.1
(22) Date of filing: 23.05.2013
(51) Int. Cl.: A45C 11/00

(54) **CLEANING APPARATUS FOR MOBILE ELECTRONIC DEVICES**
REINIGUNGSVORRICHTUNG FÜR MOBILE ELEKTRONISCHE VORRICHTUNGEN
APPAREIL DE NETTOYAGE POUR DISPOSITIFS ÉLECTRONIQUES MOBILES

(30) Priority: 23.05.2012 GB 201209284; 28.08.2012 GB 201215263; 16.10.2012 GB 201218561
(43) Date of publication of application: 01.04.2015
(73) Proprietor: Sanseva Ltd, Douglas, Isle of Man IM99 1AP (GB)
(72) Inventor: BATEY, Derek, Douglas, Isle of Man IM99 1AP (GB)
(74) Representative: Cross, James Peter Archibald
(86) International application number: PCT/GB2013/051354
(87) International publication number: WO 2013/175219

(56) References cited:
- EP-A1- 2 103 231
- WO-A1-2008/037438
- WO-A1-2013/142523
- GB-A- 343 210
- JP-A- 2001 275 730
- JP-A- 2003 079 418
- JP-A- 2008 018 113
- US-A1- 2004 166 910
- US-A1- 2005 161 352
- US-A1- 2011 290 841
- US-A1- 2012 008 880
- US-A1- 2012 114 270
- Glamrox: "Glamrox Mobile Phone Cleaning Sock", , 5 March 2001 (2001-03-05), Retrieved from the Internet: URL:http://web.archive.org/web/20110305123 358/http://www.amazon.co.uk/Glamrox-Mobile -Phone-Cleaning-Sock/dp/B002UOXE2K [retrieved on 2017-02-09]

## Description

### Field of the Invention

This invention relates to cleaning apparatus for mobile electronic devices, particularly for such devices having touch-sensitive screens.

### Background of the Invention

Mobile electronic devices with touch-sensitive screens ('touchscreens') for providing user input have proved highly popular with consumers; examples include tablet computing devices or smartphones such as the Apple® iPad®, iPod® and iPhone®, the Blackberry® Torch®, and the Samsung® Galaxy Ace®. However, use of the touchscreens tends to leave marks on the screen, such as finger marks, which then need to be cleaned to preserve the appearance of the device and the visibility of the screen.

One solution is for the user to carry a suitable cleaning cloth, made for example of microfiber, and manually clean the screen as it gets dirty. However, this requires a specific cleaning action by the user, and it may be inconvenient for the user to carry a cleaning cloth. Another solution is to carry the mobile device in a pouch made of cleaning material, which serves to protect the device to some extent, and also can be used for cleaning. However, this again requires a specific cleaning action by the user.

GB-A- 2458474 discloses a stretchable knitted pouch with an inner lining of stretchable microfibre for cleaning a mobile device as it is inserted or removed. US-A-20080257921 discloses a cleaner pouch with a soft fabric inner layer. US-A-20040166910 discloses a case for a cellular phone, with corrugated internal protrusions for absorbing external impact. WO 2008/037438 A1 discloses a receptacle with a removable flat insert.

### Summary of the Invention

According to the present invention, there is provided a flexible pouch according to claim 1.

Advantageously, the pouch provides the dual functionality of protecting the device and cleaning the screen of the device, without requiring the user to perform any specific cleaning action. Instead, the localised portion of cleaning material automatically cleans the screen as a side effect of the device being removed from or inserted into the pouch.

The localised portion of cleaning material may project inwardly of the inner surface of the pouch, so as to apply pressure to the screen of the device as it slides past the cleaning portion and thereby enhance the cleaning effect. This feature is preferable for devices in which the screen is recessed slightly from its surround in the device, but is also applicable to devices where the screen is flush with the surround, or where the screen extends to the edges of the device.

A shock-absorbing material may be provided between the cleaning material and the pouch, to protect the device from shock without contacting the device.

The major inner faces of the pouch are biased together so that pressure is applied to the surface of device, and particularly to the screen of the device, during insertion or removal.

The flexible pouch may be reversible, and may include an internal pocket that can hold the device when the pouch is reversed, so that the reversed pouch can be used to clean another device without causing damage to the device.

It will be appreciated that the form of the housing in embodiments of the invention will depend on the form of the device for which the housing is intended, and that aspects of the invention must therefore be described in functional terms with reference to the device. However, in practical situations, the skilled person will have little difficulty in determining the scope of the present invention as defined in the appended claims.

### Brief Description of the Drawings

There now follows, by way of example only, a detailed description of embodiments of the present invention, with reference to the figures identified below:
Figure 1a is a schematic plan diagram of an embodiment of the invention;
Figure 1b is a schematic cross-section through the line A-A of Figure 1a;
Figure 1c is a schematic cross-section showing an alternative construction to that of Figure 1b;
Figures 2a and 2b are perspective front and rear views of a pouch in the embodiment;
Figure 3 is a perspective view of a variant, with a removable portion of cleaning material;
Figure 4 is a schematic plan view of an embodiment of the present invention, with a removable cleaning portion.

### Detailed Description of Embodiments of the Invention

In the following description, the same reference numerals are used to indicate similar, though not necessarily identical features between the different embodiments. The figures are intended to be schematic and not to scale, and relative dimensions should not be derived from them.

### Embodiment

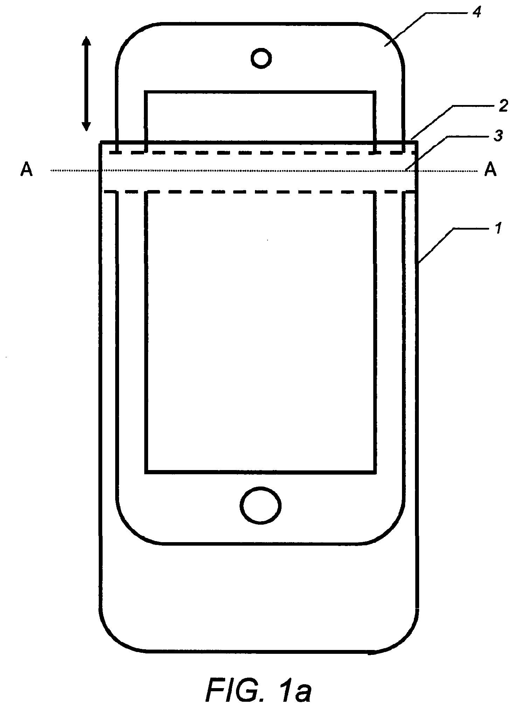

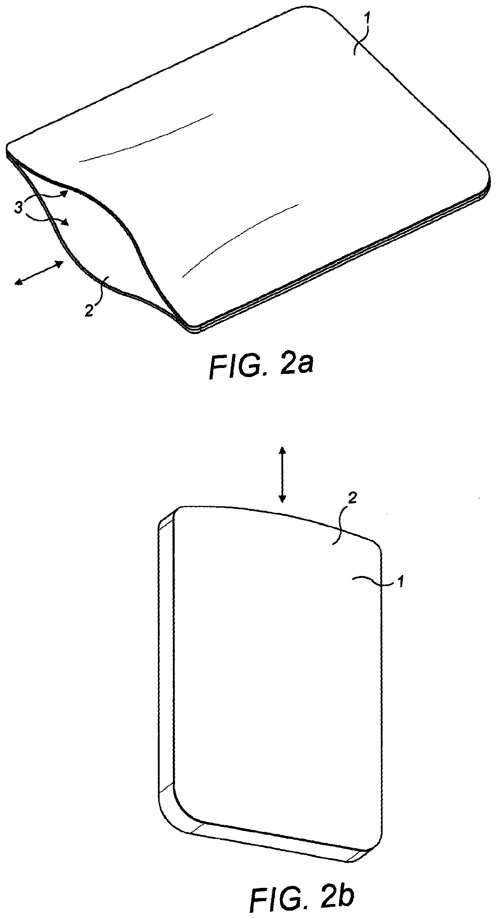

Figures 1a to 2b show an embodiment of the invention, comprising a flexible pouch 1 for housing a mobile electronic device 4. The pouch 1 includes an opening 2 at at least one end thereof, for sliding insertion and removal of the device 4 into and out of the pouch 1, as shown by the arrows in the Figures. Optionally, and not shown in the Figures, the opening 2 may be closable by a moveable or removable portion, such as a lid or cover.

At least a portion of the inner surface of the pouch 1 comprises cleaning material 3, such a microfibre material, suede, cotton, linen, natural or artificial sponge, or the like. The cleaning material 3 is selected for its ability to clean finger marks, or other marks such as water marks, from the surface of the device 4, without damaging said surface.

The cleaning material 3 may be treated or impregnated with a cleaning and/or disinfecting liquid or additive. Preferably, the cleaning material 3 is treated with a permanent antimicrobial treatment that does not require replenishment during the effective lifetime of the pouch 1. The antimicrobial treatment may be bonded to the cleaning material 3 during manufacture. In one example, the antimicrobial treatment comprises a silane base bonded to the surface of the cleaning material 3, a positively charged component that attracts a negatively charged cell membrane, and/or a long molecular chain that pierces the cell membrane. In another example, the antimicrobial treatment comprises an ionic silver surface treatment.

The cleaning material 3 is removable.

The pouch 1 itself may be made of protective material, such as plastic, leather, fabric or suede, so as to protect the surface of the device 4 from scratches or other damage. The pouch 1 is preferably dimensioned to provide a tight or snug fit for the device 4, such that the inner surface of the pouch 1 is pressed against the surface of the device 4 as it is inserted into or removed from the pouch 1, thus wiping the cleaning material along, and thereby cleaning, the surface of the device 4. The pouch 1 and/or the cleaning material 3 may be resilient, to ensure a suitable pressure of the cleaning material 3 against the surface of the device 4. The major faces of the pouch 1 are made of congruent rectangular sheets of resilient material fixed together at three of their edges.

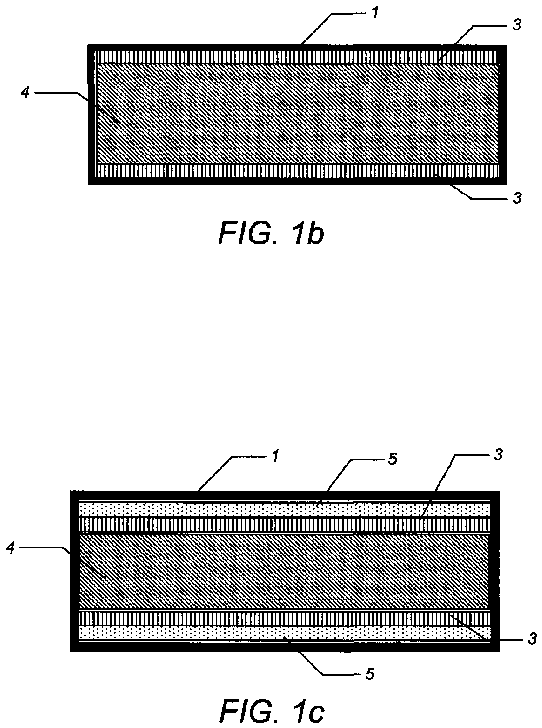

The cleaning material 3 may be provided on both inner major faces of the pouch 1, as shown in Figure 1b, or on only one face, preferably the one which is intended to contact a screen of the mobile device 4. The cleaning material 3 may be provided only on a portion of the inner surface adjacent the opening 2, as shown schematically in Figure 1a, so that it cleans the surface of the device 4 as it passes the portion. The cleaning material 3 may project inwardly from the inner surface of the pouch 1, so as to apply pressure to the surface of the device 4 and thereby enhance the cleaning effect. Providing the cleaning material 3 only on a portion of the inner surface enhances the pressure, as the force between the pouch 1 and the device 4 is concentrated on a smaller area. Alternatively, the cleaning material 3 may be provided over substantially the whole area of one or both inner major faces, to maximize the cleaning area.

Optionally as shown in Figure 1c, a shock-absorbent material 5 such as EPE polyethylene foam may be provided between the inner surface of the pouch 1 and the cleaning material 3. In this way, the pouch 1 may protect the device 4 from shock as well as providing a cleaning function. Preferably, the shock-absorbent material 5 may be resilient so as to press the cleaning material 3 against the device 4. The construction of the shock absorbent layer 5 between the inner surface of the pouch 1 and the cleaning material 3 is particularly advantageous, as the cleaning material 3 protects the surface of the device 4 from coming into contact with the shock-absorbent material 5, which may then be selected for optimum shock absorbing performance without regard to compatibility with the surface of the device 4.

The cleaning material 3 and/or the shock-absorbent material 5 may have anti-static properties, for example by impregnation with anti-static solvent.

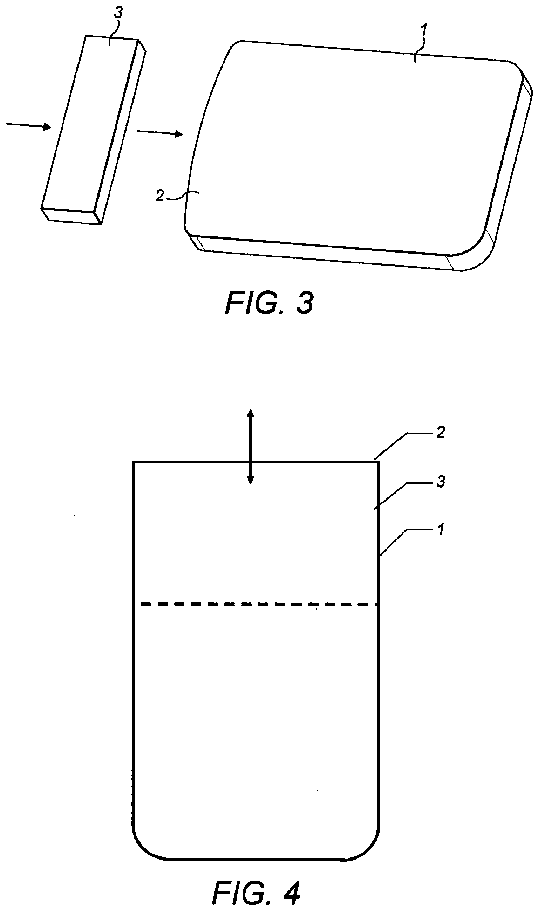

As shown in Figure 3, the cleaning material 3 may alternatively be provided separately from the pouch 1, for example as an insert or liner that can be fitted to the pouch 1. The insert may be removable for cleaning or replacement. The insert may include a resilient structure, such as one or more plastic or metal strips, so as to bias the cleaning material 3 against the surface of the device 4. The cleaning material 3, when separated from the pouch 1, may be used to clean the surface of the device 4 or of another device, such as a tablet computer which is not able to fit within the pouch 1.

As shown in Figure 4, the cleaning material 3 may be provided on one or both sides of a substrate. The substrate is shaped to fit within the pouch 1 through the opening 2. The substrate has a width that is approximately equal to the width of the pouch 1. The substrate is removably held in position by abutment of its sides against the sides of the pouch 1; thus, no specific removable fixing is required on the substrate itself.

The substrate may be resilient or flexible; this facilitates cleaning of another device with the cleaning material, since the resilience may be used to apply an even pressure of the other device when cleaning. The substrate may be of plastics material.

The substrate may be approximately rectangular and may be credit-card sized (e.g. conforming to standard ISO/IEC 7810 ID-1, 2 or 3), for easy storage in a wallet or the like when separated from the pouch 1.

### Alternative Embodiments

Features of the above embodiments may be combined, except where they are clearly incompatible.

The above embodiments are described by way of example, and alternative embodiments which may become apparent to the skilled person on reading the above description may nevertheless fall within the scope of the claims.

## Claims

1. A flexible pouch (1) for a mobile electronic device (4), the pouch including an opening at at least one end thereof for sliding insertion and removal of the device (4) into and out of the pouch, wherein at least a portion of an inner surface of the flexible pouch (1) comprises a removable cleaning material (3), major faces of the pouch (1) being made of congruent rectangular sheets of resilient material fixed together at three of their edges and biased together so that pressure is applied to the surface of the device (4) during insertion or removal, thereby cleaning at least part of the surface of the device (4) as the device is slidably removed from and/or inserted into the pouch (1), and wherein the cleaning material is provided on a substrate shaped to fit within the pouch through the opening and having a width that is approximately equal to the width of the pouch (1), **characterised in that** the substrate is removably held in position by abutment of its sides against the sides of the pouch.

2. The pouch of claim 1, wherein the cleaning material has a substantially permanent antimicrobial surface treatment.

3. The pouch of claim 2, wherein the antimicrobial surface treatment comprises a silane base bonded to the cleaning material (3).

4. The pouch of claim 2, wherein the antimicrobial surface treatment comprises an ionic silver surface treatment.

5. The pouch of any preceding claim, wherein the substrate is resilient.

6. The pouch of any preceding claim, wherein the substrate is of plastic material.

7. The pouch of any preceding claim, wherein the substrate is rectangular.

8. The pouch of any preceding claim, wherein shock-absorbing material (5) is disposed on at least a portion of the inner surface of the pouch (1), so as to protect the device (4) from shock.

9. The pouch of any preceding claim, containing the mobile electronic device (4).

10. The pouch of claim 9, wherein the mobile device (4) has a touch-sensitive screen, and the cleaning material (3) is arranged to clean the touch-sensitive screen as the device (4) is slidably removed from and/or inserted into the pouch (1).

## Patentansprüche

1. Biegsamer Beutel (1) für eine mobile elektronische Vorrichtung (4), wobei der Beutel eine Öffnung an mindestens einem Ende derselben zum gleitenden Einschieben und Herausziehen der Vorrichtung (4) in den und aus dem Beutel umfasst, wobei mindestens ein Abschnitt einer inneren Oberfläche des biegsamen Beutels (1) ein entnehmbares Reinigungsmaterial (3) umfasst, wobei Hauptseiten des Beutels (1) aus deckungsgleichen rechteckigen Bögen aus elastischem Material, die an dreien ihrer Ränder aneinander befestigt sind und aufeinander zu vorbelastet sind, hergestellt sind, sodass während des Einschiebens oder Herausziehens Druck auf die Oberfläche der Vorrichtung (4) ausgeübt wird, wodurch mindestens ein Teil der Oberfläche der Vorrichtung (4) gereinigt wird, wenn die Vorrichtung gleitend aus dem Beutel (1) herausgezogen und/oder in ihn eingeschoben wird, und wobei das Reinigungsmaterial auf einem Substrat bereitgestellt ist, das geformt ist, um durch die Öffnung in den Beutel zu passen und das eine Breite aufweist, die ungefähr gleich der Breite des Beutels (1) ist, **dadurch gekennzeichnet, dass** das Substrat durch das Anliegen seiner Seiten an den Seiten des Beutels entnehmbar in Position gehalten wird.

2. Beutel nach Anspruch 1, wobei das Reinigungsmaterial eine im Wesentlichen dauerhafte antimikrobielle Oberflächenbehandlung aufweist.

3. Beutel nach Anspruch 2, wobei die antimikrobielle Oberflächenbehandlung eine an das Reinigungsmaterial (3) geklebte Silanbasis umfasst.

4. Beutel nach Anspruch 2, wobei die antimikrobielle Oberflächenbehandlung eine Silberionen-Oberflächenbehandlung umfasst.

5. Beutel nach einem der vorangehenden Ansprüche, wobei das Substrat elastisch ist.

6. Beutel nach einem der vorangehenden Ansprüche, wobei das Substrat aus einem Kunststoff besteht.

7. Beutel nach einem der vorangehenden Ansprüche, wobei das Substrat rechteckig ist.

8. Beutel nach einem der vorangehenden Ansprüche, wobei stoßdämpfendes Material (5) auf mindestens einem Abschnitt der inneren Oberfläche des Beutels (1) angeordnet ist, um die Vorrichtung (4) vor Stößen zu schützen.

9. Beutel nach einem der vorangehenden Ansprüche, der die mobile elektronische Vorrichtung (4) enthält.

10. Beutel nach Anspruch 9, wobei die mobile Vorrichtung (4) einen berührungsempfindlichen Bildschirm aufweist und das Reinigungsmaterial (3) dazu angeordnet ist, den berührungsempfindlichen Bildschirm zu reinigen, wenn die Vorrichtung (4) gleitend aus dem Beutel (1) herausgezogen und/oder in ihn eingeschoben wird.

## Revendications

1. Pochette souple (1) pour un dispositif électronique mobile (4), la pochette comprenant une ouverture au niveau d'au moins une extrémité de celle-ci à des fins d'insertion et de retrait par coulissement du dispositif (4) dans et hors de la pochette, dans laquelle au moins une partie d'une surface intérieure de la pochette souple (1) comporte un matériau nettoyant amovible (3), des faces majeures de la pochette (1) étant réalisées à partir de feuilles rectangulaires congruentes de matériau élastique fixées ensemble au niveau de trois de leurs bords et sollicitées ensemble de telle sorte que toute pression appliquée sur la surface du dispositif (4) au cours de l'insertion ou du retrait, permettant de ce fait de nettoyer au moins une partie de la surface du dispositif (4) alors que le dispositif est retiré par coulissement en provenance de et/ou inséré par coulissement dans la pochette (1), et dans laquelle le matériau nettoyant est mis en oeuvre sur un substrat façonné pour s'adapter à l'intérieur de la pochette au travers de l'ouverture et ayant une largeur qui est approximativement égale à la largeur de la pochette (1), **caractérisée en ce que** le substrat est retenu de manière amovible en position par la mise en butée de ses côtés contre les côtés de la pochette.

2. Pochette selon la revendication 1, dans laquelle le matériau nettoyant a un traitement de surface antimicrobien sensiblement permanent.

3. Pochette selon la revendication 2, dans laquelle le traitement de surface antimicrobien comporte une base en silane liée au matériau nettoyant (3).

4. Pochette selon la revendication 2, dans laquelle le traitement de surface antimicrobien comporte un traitement de surface à base d'argent ionique.

5. Pochette selon l'une quelconque des revendications précédentes, dans laquelle le substrat est élastique.

6. Pochette selon l'une quelconque des revendications précédentes, dans laquelle le substrat est en matière plastique.

7. Pochette selon l'une quelconque des revendications précédentes, dans laquelle le substrat est rectangulaire.

8. Pochette selon l'une quelconque des revendications précédentes, dans laquelle un matériau amortisseur de chocs (5) est disposé sur au moins une partie de la surface intérieure de la pochette (1), de manière à protéger le dispositif (4) contre tout choc.

9. Pochette selon l'une quelconque des revendications précédentes, contenant le dispositif électronique mobile (4).

10. Pochette selon la revendication 9, dans laquelle le dispositif mobile (4) a un écran tactile, et le matériau nettoyant (3) est agencé pour nettoyer l'écran tactile alors que le dispositif (4) est retiré par coulissement en provenance de et/ou inséré par coulissement dans la pochette (1).
